Europäisches Patentamt

European Patent Office

Office européen des brevets

(19)

(11) Veröffentlichungsnummer: **0 195 918**
**B1**

(12) **EUROPÄISCHE PATENTSCHRIFT**

(45) Veröffentlichungstag der Patentschrift: **23.05.90**

(51) Int. Cl.⁵: **C 08 F 2/38, C 08 L 55/00**

(21) Anmeldenummer: **86101889.3**

(22) Anmeldetag: **14.02.86**

(60) Teilanmeldung 88105364 eingereicht am 02.04.88.

(54) Schwefelhaltige Polymerisate.

(30) Priorität: **20.02.85 DE 3505747**

(43) Veröffentlichungstag der Anmeldung:
**01.10.86 Patentblatt 86/40**

(45) Bekanntmachung des Hinweises auf die
Patenterteilung:
**23.05.90 Patentblatt 90/21**

(84) Benannte Vertragsstaaten:
**BE CH DE FR GB LI NL**

(56) Entgegenhaltungen:
**EP-A-0 196 423**
**FR-A-2 145 498**

(73) Patentinhaber: **BAYER AG**
**D-5090 Leverkusen 1 Bayerwerk (DE)**

(72) Erfinder: **Eichenauer, Herbert, Dr.**
**Goethestrasse 71**
**D-4047 Dormagen 1 (DE)**
Erfinder: **Pischtschan, Alfred, Dr.**
**Zur Eiche 33**
**D-5067 Kürten (DE)**
Erfinder: **Ott, Karl-Heinz- Dr.**
**Paul-Klee-Strasse 54**
**D-5090 Leverkusen 1 (DE)**

EP 0 195 918 B1

**Beschreibung**

Gegenstand der vorliegenden Erfindung sind schwefelhaltige Polymerisate mit terminalen Thioalkylgruppen, die eine Grenzviskosität von 2 bis 15 ml/g (gemessen in DMF bei 25°C) und einen Schwefelgehalt von 1,15 bis 3,95 Gew.-% aufweisen.

ABS-Polymerisate besitzen eine gute Eigenschaftskombination aus hoher Kerbschlagzähigkeit, guter Chemikalienbeständigkeit und leichter Verarbeitbarkeit, Trotzdem kann es in speziellen Fällen, so z.B. bei ABS-Abmischungen mit hohem Kautschukgehalt zu einer für die Praxisanforderungen moderner Verarbeitungstechnologie nicht ausreichenden Fließfähigkeit des thermoplastischen Materials kommen. Abhilfe durch Zugabe niedermolekularer Fließhilfsmittel wie z.B. Ethylendiaminbisstearoylamid oder Calciumstearat führt oft zu Zähigkeitsverlusten, verminderter Wärmeformbeständigkeit oder zu einer Auswanderung des zugesetzten Gleitmittels.

Eine Verbesserung der Fließfähigkeit durch Erhöhung der Verarbeitungstemperatur läßt sich meist nur mit einem teilweisen thermooxaditiven Abbau der Kautschukphase erkaufen.

Es bestand daher ein Bedarf an einem thermoplastischen Material, das zur Verbesserung der Fließfähigkeit von ABS-Thermoplastharzen eingesetzt werden kann, welches keine negativen Auswirkungen auf die ABS-Eigenschaften, insbesondere Zähigkeit und Wärmeformbeständigkeit, ausübt, und das einer thermooxidativen Zersetzung der Kautschukphase entgegenwirkt.

Gegenstand der Erfindung sind schwefelhaltige Polymerisate aus Styrol, α-Methylstyrol, p-Methylstyrol, Vinyltoluol, Acrylnitril oder Methylmethacrylat oder Mischungen daraus mit einer Grenzviskosität von 2 bis 15 ml/g, vorzugsweise von 3 bis 12 ml/g (gemessen in DMF bei 25°C) und einem Schwefelgehalt von 1,15 bis 3,95 Gew.-%, vorzugsweise von 1,25 bis 2,40 Gew.-% wobei der eingebaute Schwefel als terminale $C_{1-18}$-Thioalkylgruppen vorliegt.

Bevorzugte schwefelhaltige Polymerisate sind solche, dit mit ABS-Polymerisation eine gute Verträglichkeit besitzen, insbesondere Co- oder Terpolymerisate des (kern- oder seitenkettensubstituierten) Styrols.

Die Herstellung der erfindungsgemäßen Polymerisate kann durch Lösungs-, Suspensions- oder Emulsionspolymerisation oder durch Kombination dieser Verfahren in an sich bekannter Weise erfolgen, bevorzugt ist die Polymerisation in Emulsion.

Diese wird vorzugsweise unter Verwendung anionischer Emulgatoren wie z.B. Natrium-, Kalium- oder Ammoniumsalze langkettiger Fettsäuren mit 10 bis 20 C-Atomen, z.B. Kaliumoleat, Alkylsulfat mit 10 bis 20 C-Atomen, Alkylarylsulfonate mit 10 bis 20 C-Atomen oder Alkali- bzw. Ammoniumsalze der disproportionierten Abietinsäure durchgeführt.

Die Polymerisationsreaktion kann in einem weiten Temperaturbereich durchgeführt werden, vorzugsweise erfolgt sie zwischen 30° und 100°C, besonders bevorzugt zwischen 50° und 80°C.

Geeignete radikalbildende Initiatoren sind organische und anorganische Peroxide, anorganische Persulfate wie z.B. Kaliumpersulfat, Azoinitiatoren wie z.B. Azobisisobutyronitril, sowie Redox-Systeme, die aus einem Oxidationsmittel, vorzugsweise einem Peroxid, und einem Reduktionsmittel bestehen. Als bevorzugter Initiator wird Kaliumpersulfat eingesetzt, die Einsatzmengen betragen zwischen 0,1 und 0,5 Gew.-% (bezogen auf die Monomermenge).

Die Einführung der terminalen Thioalkylgruppen erfolgt durch Polymerisation eines Gemisches aus Monomeren und $C_{1-18}$-Alkylmercaptan, wobei das als Kettenüberträger wirkende Mercaptan als endständige Thioalkylgruppe eingebaut wird.

Beispiele für einsetzbare $C_{1-18}$-Alkylmercaptane sind Ethylmercaptan, n-Propylmercaptan, n-Butylmercaptan, tert.-Butylmercaptan, n-Pentylmercaptan, n-Hexylmercaptan, n-Octylmercaptan, N-Decylmercaptan, n-Dodecylmercaptan, tert.-Dodecylmercaptan, n-Hexadecylmercaptan und n-Octadecylmercaptan.

Bevorzugte Alkylmercaptane sind tert.-Dodecylmercaptan und n-Dodecylmercaptan bzw. deren Gemische.

In folgenden werden bevorzugte schwefelhaltige radikalisch initiierte Emulsions-Polymerisate beschrieben:

(A) Schwefelhaltiges Polymerisat erhalten durch Polymerisation eines Gemisches aus

a) 50 bis 80 Gew.-Teilen, vorzugsweise 55 bis 75 Gew.-Teilen (α-Methyl)Styrol und/oder p-Methylstyrol bzw. anderen Vinyltoluol ein

b) 10 bis 30 Gew.-Teilen, vorzugsweise 15 bis 27,5 Gew.-Teilen Acrylnitril oder Methacrylnitril und

c) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen.

(B) Schwefelhaltiges Polymerisat erhalten durch radikalisch initiierte Emulsions-Polymerisation eines Gemisches aus

a) 50 bis 80 Gew.-Teilen, vorzugsweise 55 bis 75 Gew.-Teilen (α-Methyl)Styrol und/oder p-Methylstyrol bzw. anderen Vinyltoluolen,

b) 10 bis 30 Gew.-Teilen, vorzugsweise 15 bis 27,5 Gew.-Teilen (Meth)Acrylnitril und

c) 7,5 bis 25 Gew.-Teilen, vorzugsweise 8 bis 15 Gew.-Teilen tert.-Dodecylmercaptan und/oder n-Dodecylmercaptan bzw. deren Gemische.

(C) Schwefelhaltiges Polymerisat erhalten durch radikalisch initiierte Emulsions-Polymerisation eines Gemisches aus

a) 25 bis 75 Gew.-Teilen, vorzugsweise 30 bis 70 Gew.-Teilen (α-Methyl)Styrol und/oder p-Methylstyrol bzw. anderen Vinyltoluolen,

b) 25 bis 75 Gew.-Teilen, vorzugsweise 30 bis 70 Gew.-Teilen Methylmethacrylat und

c) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen.

(D) Schwefelhaltiges Polymerisat erhalten durch radikalisch initiierte Emulsions-Polymerisation eines Gemisches aus

a) 25 bis 75 Gew.-Teilen, vorzugsweise 30 bis 70 Gew.-Teilen (α-Methyl)Styrol und/oder p-Methylstyrol bzw. anderen Vinyltoluolen,

b) 25 bis 75 Gew.-Teilen, vorzugsweise 30 bis 70 Gew.-Teilen Methylmethacrylat und

c) 7,5 bis 25 Gew.-Teilen, vorzugsweise 8 bis 15 Gew.-Teilen tert.-Dodecylmercaptan und/oder n-Dodecylmercaptan bzw. deren Gemische.

(E) Schwefelhaltiges Polymerisat erhalten durch radikalisch initiierte Emulsions-Polymerisation eines Gemisches aus

a) 10 bis 60 Gew.-Teilen, vorzugsweise 20 bis 50 Gew.-Teilen (α-Methyl)Styrol und/oder p-Methylstyrol bzw. anderen Vinyltoluolen,

b) 10 bis 60 Gew.-Teilen, vorzugsweise 20 bis 50 Gew.-Teilen Methylmethacrylat,

c) 10 bis 30 Gew.-Teilen, vorzugsweise 5 bis 27,5 Gew-Teilen Acrylnitril oder Methacrylnitril und

d) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen,

(F) Schwefelhaltiges Polymerisat erhalten durch radikalisch initiierte Emulsions-Polymerisation eines Gemisches aus

a) 10 bis 60 Gew.-Teilen, vorzugsweise 20 bis 50 Gew.-Teilen (α-Methyl)Styrol und/oder p-Methylstyrol bzw. anderen Vinyltoluolen,

b) 10 bis 60 Gew.-Teilen, vorzugsweise 20 bis 50 Gew.-Teilen Methylmethacrylat,

c) 10 bis 30 Gew.-Teilen, vorzugsweise 5 bis 27,5 Gew.-Teilen Acrylnitril oder Methacrylnitril und

d) 7,5 bis 25 Gew.-Teilen, vorzugsweise 8 bis 15 Gew.-Teilen tert.-Dodecylmercaptan und/oder n-Dodecylmercaptan bzw. deren Gemische.

(G) Schwefelhaltiges Polymerisat erhalten durch radikalisch initiierte Emulsions-Polymerisation eines Gemisches aus

a) 50 bis 80 Gew.-Teilen, vorzugsweise 55 bis 75 Gew.-Teilen Methylmethacrylat,

b) 10 bis 30 Gew.-Teilen, vorzugsweise 15 bis 27,5 Gew.-Teilen Acrylnitril oder Acrylnitril und

c) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen.

(H) Schwefelhaltiges Polymerisat erhalten durch radikalisch initiierte Emulsions-Polymerisations eines Gemisches aus

a) 50 bis 80 Gew.-Teilen, vorzugsweise 55 bis 75 Gew.-Teilen Methylmethacrylat,

b) 10 bis 30 Gew.-Teilen, vorzugsweise 15 bis 27,5 Gew.-Teilen Acrylnitril und oder Methacrylnitril

c) 7,5 bis 25 Gew.-Teilen, vorzugsweise 8 bis 15 Gew.-Teilen tert.-Dodecylmercaptan und/oder n-Dodecylmercaptan bzw. deren Gemische.

Ein besonderes Verfahren zur Herstellung schwefelhaltiger Polymerisate aus Styrol, α-Methylstyrol, p-Methylstyrol, Vinyltoluol, Acrylnitril oder Methylmethacrylat oder Mischungen daraus mit einer Grenzviskosität von 2 bis 15 ml/g (gemessen in Dimethylformamid bei 25°C) ist dadurch gekennzeichnet, daß das Monomer bzw. das Monomergemisch in Gegenwart eines $C_{1-18}$-Alkylmercaptans oder Mischungen daraus in Mengen von $0,503 \cdot x + 1,222)$ Gew.-% bis $(1,728 \cdot x + 4,197)$ Gew.-% (bezogen auf Summe aus Monomer, und Mercaptanmenge) mit Hilfe radikalischer Initiatoren polymerisiert wird, wobei X die Anzahl der C-Atome im Alkylmercaptan bedeutet.

Die erfindungsgemäßen schwefelhaltigen Polymerisate, die Grenzviskositäten von 2 bis 15 ml/g (gemessen in DMF bei 25°C) besitzen, eignen sich als Mittel zur Verbesserung der Fließfähigkeit von ABS-Polymerisaten bei der thermoplastischen Verarbeitung. Dabei werden sie den ABS-Polymerisaten in Mengen von 0,5 bis 15 Gew.-%, vorzugsweise von 1 bis 10 Gew.-% und besonders bevorzugt von 1,5 bis 7,5 Gew.-% zugesetzt. Aufgrund ihres Gehaltes an endständigen Thioalkylgruppen zeigen sie zum einen eine gute Wirksamkeit als Sauerstoffänger, wobei die Thioethergruppierung in Sulfoxid- oder Sulfongruppierungen überführt wird, zum anderen trägt die Alkylgruppe, insbesondere eine längerkettige Gruppierung wie z.B. der Dodecylrest, zu einer erhöhten Wirksamkeit als Fließfähigkeitsverbesserer bei.

Beispielsweise kann man thermoplastische Mischungen enthaltend Pfropfpolymerisate A), Copolymerisate B) und Polymerisate C) herstellen, die Polymerisat C) in Mengen von 0,5 bis 15 Gew.-Teilen, bezogen jeweils auf 100 Gew.-Teile Mischung aus Pfropfpolymerisate A), Copolymerisate B) und Polymerisate C), enthalten.

Besondere thermoplastische Mischungen sind dadurch gekennzeichnet, daß das Polymerisat C) durch Polymerisation eines Gemisches aus

a) 50 bis 80 Gew.-Teilen, vorzugsweise 55 bis 75 Gew.-Teilen (α-Methyl)Styrol und/oder p-Methylstyrol bzw. Vinyltoluol,

b) 10 bis 30 Gew.-Teilen, vorzugsweise 15 bis 27,5 Gew.-Teilen (Meth)Acrylnitril und

c) 7,5 bis 25 Gew.-Teilen, vorzugsweise 8 bis 15 Gew.-Teilen tert.-Dodecylmercaptan und/oder n-Dodecylmercaptan bzw. deren Gemische, hergestellt worden ist.

Von ganz besonderem Interesse sind thermoplastische Mischungen, die dadurch gekennzeichnet sind, daß sie

A) 5 bis 80 Gew.-Teile eines Pfropfpolymerisates aus

A)1) 5 bis 90 Gew.-Teilen einer Mischung aus

A)1)1) 50 bis 90 Gew.-% Styrol, α-Methylstyrol, kernsubstituiertem Styrol, Methylmethacrylat oder Mischungen daraus und

A)1)2) 50 bis 10 Gew.-% (Meth)Acrylnitril, Methylmethacrylat, N-substituiertem Maleinimid oder Mischungen daraus, auf

A)2) 95 bis 10 Gew.-Teile eines Kautschuks mit einer Glastemperatur ≤10°C, und

B) 5 bis 95 Gew.-Teilen eines thermoplastischen Copolymerisats mit einem $\overline{M}_w$ von 15 000 bis 200 000 (gemessen durch Lichtstreuung oder Sedimentation) aus

B)1) 50 bis 95 Gew.-% Styrol, α-Methylstyrol,

kernsubstituiertem Styrol, Methylmethacrylat oder Mischungen daraus, und

B)2) 50 bis 5 Gew.-% (Meth)Acrylnitril, Methylmethacrylat, Maleinsäureanhydrid, N-substituiertem Maleinimid oder Mischungen daraus, enthalten, wobei die Summe der Gew.-Teile aus Pfropfpolymerisat A), Copolymerisat B) und Polymerisat C) jeweils wieder 100 beträgt.

Beispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

Beispiel 1

3,06 Teile Styrol, 1,19 Teile Acrylnitril und 0,75 Teile tert.-Dodecylmercaptan werden unter Stickstoff zusammen mit 0,08 Teilen des Natriumsalzes der disproportionierten Abietinsäure in 68 Teilen Wasser emulgiert, wonach 0,3 Teile Kaliumpersulfat (gelöst in 24 Teilen Wasser) zugegeben werden und die Mischung auf 65°C erwärmt wird. Danach werden im Laufe von 4 h eine Mischung aus 58,14 Teilen Styrol, 22,61 Teilen Acrylnitril und 14,25 Teilen tert.-Dodecylmercaptan sowie eine Löung von 1,92 Teilen des Natriumsalzes der disproportionierten Abietinsäure in 25 Teilen Wasser zudosiert, wobei die Reaktionstemperatur von 65°C beibehalten wird. Nach einer Nachreaktionszeit wird der Latex in einer kalten Magnesiumsulfat/Essigsäure-Lösung koaguliert. Das nach Trocknung bei 70°C im Vakuum in einer Ausbeute von 97% erhaltene Polymerisat besitzt einen Schwefelgehalt von 2,3% und eine Grenzviskosität von 6,7 ml/g (in Dimethylformamid bei 25°C).

Beispiel 2

3,10 Teile α-Methylstyrol, 1,40 Teile Acrylnitril und 0,50 Teile tert.-Dodecylmercaptan werden unter Stickstoff zusammen mit 0,08 Teilen des Natriumsalzes eines $C_{9-18}$-Alkylsulfonsäure-Gemisches in 80 Teilen Wasser emulgiert, mit 0,3 Teilen Kaliumpersulfat (gelöst in 15 Teilen Wasser) versetzt und auf 70°C erwärmt. Danach werden im Laufe von 4 h eine Mischung aus 59,00 Teilen α-Methylstyrol, 26,50 Teilen Acrylnitril und 9,5 Teilen tert.-Dodecylmercaptan sowie eine Lösung von 1,92 Teilen des Natriumsalzes eines $C_{9-18}$-Alkylsulfonsäure-Gemisches in 25 Teilen Wasser zudosiert, wobei die Reaktionstemperatur von 70°C beibehalten wird. Nach einer Nachreaktionszeit wird der Latex in einer kalten Calciumchlorid-Lösung koaguliert. Nach Trocknung im Vakuum bei 70°C wird in 95% Ausbeute ein Polymerisat mit einem Schwefelgehalt von 1,5% und einer Grenzviskosität von 10,9 ml/g (in Dimethylformamid bei 25°C) erhalten.

Beispiel 3

Ein Gemisch aus 2,25 Teilen Styrol, 2,25 Teilen Methylmethacrylat und 0,50 Teilen tert.-Dodecylmercaptan wird unter Stickstoff mit 0,08 Teilen des Natriumsalzes der disproportionierten Abietinsäure in 80 Teilen Wasser emulgiert, mit 0,3 Teilen Kaliumpersulfat (gelöst in 15 Teilen Wasser) versetzt und auf 65°C erwärmt. Dann werden im Lauf von 4 h eine Mischung aus 42,75 Teilen Styrol, 42,75 Teilen Methylmethacrylat und 9,5 Teilen tert.-Dodecylmercaptan sowie eine Lösung von 1,92 Teilen des Natriumsalzes der disproportionierten Abietinsäure in 25 Teilen Wasser zudosiert, wobei die Reaktionstemperatur bei 65°C gehalten wird. Nach einer Nachreaktionszeit wird der Latex in einer kalten Magnesiumsulfat/Essigsäure-Lösung koaguliert und das Polymerisat bei 70°C im Vakuum getrocknet. Das Polymere (Ausbeute 97%) besitzt einen Schwefelgehalt von 1,5% und eine Grenzviskosität von 6,0 ml/g (in DMF bei 25°C).

Beispiel 4

3,15 Teile Methylmethacrylat, 1,35 Teile Acrylnitril und 0,50 Teile tert.-Dodecylmercaptan werden unter Stickstoff zusammen mit 0,08 Teilen des Natriumsalzes der disproportionierten Abietinsäure in 80 Teilen Wasser emulgiert, mit 0,3 Teilen Kaliumpersulfat (gelöst in 15 Teilen Wasser) versetzt und auf 65°C erwärmt. Dann werden im Laufe von 4 h eine Mischung aus 59,85 Teilen Methylmethacrylat, 25,65 Teilen Acrylnitril und 9,5 Teilen tert.-Dodecylmercaptan sowie eine Lösung von 1,92 Teilen des Natriumsalzes der disproportionierten Abietinsäure in 25 Teilen Wasser zudosiert, wobei die Reaktionstemperatur von 65°C beibehalten wird. Nach einer Nachreaktionszeit wird der Latex in einer kalten Magnesiumsulfat/Essigsäure-Lösung koaguliert und das Polymerisat bei 70°C im Vakuum getrocknet. Das in 96% Ausbeute erhaltene Polymere besitzt einen Schwefelgehalt von 1,5% und eine Grenzviskosität von 9,5 ml/g (in DMF bei 25°C).

Beispiel 5 (Beispiel für die Anwendung)

Ein ABS-Polymerisat, bestehend aus 40 Gew.-Teilen eines Pfropfpolymerisats von 36 Gew.-Teilen Styrol und 14 Gew.-Teilen Acrylnitril auf 50 Gew.-Teile eines Polybutadiens mit einem mittleren Teilchendurchmesser ($d_{50}$) von 0,3 µm und 60 Gew.-Teilen einen Styrol-Acrylnitril-Copolymerisats aus 72 Gew.-Teilen Styrol und 28 Gew.-Teilen Acrylnitril mit einem $M_w$-Wert von ca. 80 000 ($M_w/M_n - 1 \leq 2,0$) wurde mit 4,2 Gew.-Teilen des Polymerisats aus Beispiel 1 versetzt und bei 240°C durch Spritzgießen zu einer Spirale von ca. 8 mm Breite und ca. 2 mm Stärke verarbeitet. Die Spirallänge betrug 51 cm. DSC-Messungen an dem pulverförmigen ABS-Polymerisat unter Verwendung eines DSC 2-Meßgerätes der Firma Perkin-Elmer ergaben bei der isothermen Messung bei 160°C (Spülgas Sauerstoff 3,6 l/h) eine Induktionszeit bis zur maximalen Oxidationsrate von 67,4 min.

Bei der dynamischen Messung (Spülgas Sauerstoff 3,6 l/h, Heizrate 20 K/min) lag des Maximum der exothermen Reaktion bei T=220°C.

Beispiel 6 (Vergleich)

Das in Beispiel 5 beschriebene ABS-Polymerisat wurde ohne Zusatz des Polymerisats aus Beispiel 1 unter den gleichen Bedingungen verarbeitet. Die Spriallänge betrug 47 cm.

DSC-Messungen unter gleichen Bedingungen ergaben für die isotherme Messung bei 160°C eine Induktionszeit bis zur maximalen Oxidationsrate von 3,8 min. Bei der dynamischen Messung lag das Maximum der exothermen Reaktion bei T=190,5°C.

**Patentansprüche**

1. Schwefelhaltige Polymerisate aus Styrol, α-methylstyrol, p-Methylstyrol, Vinyltoluol, Acrylnitril oder Methylmethacrylat oder Mischungen daraus mit einer Grenzviskosität von 2 bis 15 ml/g (gemessen in Dimethylformamid bei 25°C) und einem Schwefelgehalt von 1,15 bis 3,95 Gew.-% wobei der eingebaute Schwefel als terminale $C_{1-18}$-Thioalkylgruppen vorliegt.

2. Schwefelhaltiges Polymerisat gemäß Anspruch 1, dadurch gekennzeichnet, daß es durch radikalisch initiierte Emulsions-Polymerisation eines Gemisches aus

a) 50 bis 80 Gew.-Teilen (α-Methyl)Styrol und/oder p-Methylstyrol bzw. anderen Vinyltoluolen,

b) 10 bis 30 Gew.-Teilen Acrylnitril oder Methacrylnitril und

c) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen, hergestellt worden ist.

3. Schwefelhaltiges Polymerisat gemäß Anspruch 2, dadurch gekennzeichnet, daß es mit 7,5 bis 25 Gew.-Teilen tert.-Dodecylmercaptan und/oder n-Dodecylmercaptan bzw. deren Gemischen, hergestellt worden ist.

4. Schwefelhaltiges Polymerisat gemäß Anspruch 1, dadurch gekennzeichnet, daß es durch radikalisch initiierte Emulsions-Polymerisation eines Gemisches aus

a) 25 bis 75 Gew.-Teilen (α-Methyl)Styrol und/oder p-Methylstyrol bzw. anderen Vinyltoluolen,

b) 25 bis 75 Gew.-Teilen Methylmethacrylat und

c) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen, hergestellt worden ist.

5. Schwefelhaltiges Polymerisat gemäß Anspruch 4, dadurch gekennzeichnet, daß es mit 7,5 bis 25 Gew.-Teilen tert.-Dodecylmercaptan und/oder n-Dodecylmercaptan bzw. deren Gemischen, hergestellt worden ist.

6. Schwefelhaltiges Polymerisat gemäß Anspruch 1, dadurch gekennzeichnet, daß es durch radikalisch initiierte Emulsions-Polymerisation eines Gemisches aus

a) 10 bis 60 Gew.-Teilen (α-Methyl)Styrol und/oder p-Methylstyrol bzw. anderen Vinyltoluolen,

b) 10 bis 60 Gew.-Teilen Methylmethacrylat,

c) 10 bis 30 Gew.-Teilen, Acrylnitril oder Methacrylnitril und

d) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen, hergestellt worden ist.

7. Schwefelhaltiges Polymerisat gemäß Anspruch 6, dadurch gekennzeichnet, daß es mit 7,5 bis 25 Gew.-Teilen tert.-Dodecylmercaptan und/oder n-Dodecylmercaptan bzw. deren Gemischen, hergestellt worden ist.

8. Schwefelhaltiges Polymerisat gemäß Anspruch 1, dadurch gekennzeichnet, daß es durch radikalisch initiierte Emulsions-Polymerisation eines Gemisches aus

a) 50 bis 80 Gew.-Teilen, vorzugsweise 55 bis 75 Gew.-Teilen Methylmethacrylat,

b) 10 bis 30 Gew.-Teilen, vorzugsweise 15 bis 27,5 Gew.-Teilen (Meth)Acrylnitril und

c) sovielen Gew.-Teilen eines $C_{1-18}$-Alkylmercaptans oder Mischungen daraus, die einen Schwefelgehalt von 1,15 bis 3,95 Gew.-% im Polymerisat hervorrufen, hergestellt worden ist.

9. Schwefelhaltiges Polymerisat gemäß Anspruch 8, dadurch gekennzeichnet, daß es mit 7,5 bis 25 Gew.-Teilen tert.-Dodecylmercaptan und/oder n-Dodecylmercaptan bzw. deren Gemischen, hergestellt worden ist.

10. Verwendung der schwefelhaltigen Polymerisate gemäß den Ansprüchen 1 bis 9 als Mittel zur Verbesserung der Fließfähigkeit und gleichzeitig zum Schutz gegen thermooxidative Schädigung für ABS-Polymerisate.

11. Verfahren zur Herstellung schwefelhaltiger Polymerisate aus Styrol, α-Methylstyrol, p-Methylstyrol, Vinyltoluol, Acrylnitril oder Methylmethacrylat oder Mischungen daraus mit einer Grenzviskosität von 2 bis 15 ml/g (gemessen in Dimethylformamid bei 25°C), dadurch gekennzeichnet, daß das Monomer bzw. das Monomergemisch in Gegenwart eines $C_{1-18}$-Alkylmercaptans oder Mischungen daraus in Mengen von (0,503;X+1,222) Gew.-% bis (1,728;X+4,197) Gew.-% (bezogen auf Summe aus Monomer- und Mercaptanmenge) mit Hilfe radikalischer Initiatoren polymerisiert wird, wobei X die Anzahl der C-Atome im Alkylmercaptan bedeutet.

**Revendications**

1. Polymérisats contenant du soufre constitués de styrène, d'α-méthylstyrène, de p-méthylstyrène, de vinyltoluène d'acrylonitrile ou de méthacrylate de méthyle, ou bien de mélanges de ces derniers, ces polymérisats présentant une viscosité limite de 2 à 15 ml/g (mesuré dans du diméthylformamide à 25°C) et une teneur en soufre de 1,15 à 3,95 pour cent en poids, le soufre introduit se présentant sous forme de groupes thioalkyler en $C_1$—$C_{18}$ terminaux.

2. Polymérisat contenant du soufre selon la revendication 1, caractérisé en ce qu'on le prépare via polymérisation en émulsion à amorce radicalaire d'un mélange constitué de

a) 50 à 80 parties en poids d'(α-méthyl)styrène et/ou de p-méthylstyrène ou d'autres vinyltoluènes,

b) 10 à 30 parties en poids d'acrylonitrile ou de méthacrylonitrile, et

c) d'autant de parties en poids d'un alkyl(en $C_1$—$C_{18}$)mercaptan ou de mélanges de celui-ci, engendrant une teneur en soufre de 1,15 à 3,95 pour cent en poids dans le polymérisat.

3. Polymérisat contenant du soufre selon la revendication 2, caractérisé en ce que l'on prépare ce polymérisat avec 7,5 à 25 parties en poids de tert-dodécylmercaptan et/ou de n-dodécylmercaptan ou de leurs mélanges.

4. Polymérisat contenant du soufre selon la revendication 1, caractérisé en ce qu'on le prépare via polymérisation en émulsion à amorce radicalaire d'un mélange constitué de

a) 25 à 75 parties en poids d'(α-méthyl)styrène et/ou de p-méthylstyrène ou d'autres vinyltoluènes,

b) 25 à 75 parties en poids de méthacrylate de méthyle, et

c) d'autant de parties en poids d'un alkyl(en $C_1$—$C_{18}$)mercaptan ou de mélanges de celui-ci, engendrant une teneur en soufre de 1,15 à 3,95 pour cent en poids dans le polymérisat.

5. Polymérisat contenant du soufre selon la revendication 4, caractérisé en ce que l'on prépare ce polymérisat avec 7,5 à 25 parties en poids de tert-dodécylmercaptan et/ou de n-dodécylmercaptan ou de leurs mélanges.

6. Polymérisat contenant du soufre selon la revendication 1, caractérisé en ce qu'on le prépare via polymérisation en émulsion à amorce radicalaire d'un mélange constitué de

a) 10 à 60 parties en poids d'(α-méthyl)styrène et/ou de p-méthylstyrène ou d'autres vinyltoluènes,

b) 10 à 60 parties en poids de méthacrylate de méthyle,

c) 10 à 30 parties en poids d'acrylonitrile ou de méthacrylonitrile, et

d) d'autant de parties en poids d'un alkyl(en $C_1$—$C_{18}$)mercaptan ou de mélangesa de celui-ci, engendrant une teneur en soufre de 1,15 à 3,95 pour cent en poids dans le polymérisat.

7. Polymérisat contenant du soufre selon la revendication 6, caractérisé en ce que l'on prépare ce polymérisat avec 7,5 à 25 parties en poids de tert-dodécylmercaptan et/ou de n-dodécylmercaptan ou de leurs mélanges.

8. Polymérisat contenant du soufre selon la revendication 1, caractérisé en ce qu'on le prépare via polymérisation en émulsion à amorce radicalaire d'un mélange constitué de

a) 50 à 80 parties en poids, de préférence, 55 à 75 parties en poids de méthacrylate de méthyle,

b) 10 à 30 parties en poids, de préférence, 15 à 27,5 parties en poids de (méth)acrylonitrile, et

c) d'autant de parties en poids d'un alkyl(en $C_1$—$C_{18}$)mercaptan ou de mélanges de celui-ci, engendrant une teneur en soufre de 1,15 à 3,95 pour cent en poids dans le polymérisat.

9. Polymérisat contenant du soufre selon la revendication 8, caractérisé en ce que l'on prépare ce polymérisat avec 7,5 à 25 parties en poids de tert-dodécylmercaptan et/ou de n-dodécylmercaptan ou de leurs mélanges.

10. Utilisation des polymérisats contenant du soufre selon les revendications 1 à 9, comme moyen destiné à améliorer l'aptitude à l'écoulement et à simultanément protéger des polymérisats ABS contre la détérioration thermo-oxydative.

11. Procédé pour la préparation de polymérisats contenant du soufre et constitués de styrène, d'α-méthylstyrène, de p-méthylstyrène, de vinyltoluène, d'acrylonitrile ou de méthacrylate de méthyle ou bien de leurs mélanges, les polymérisats présentant une viscosité limite de 2 à 15 ml/g (mesuré dans du diméthylformamide à 25°C), caractérisé en ce que l'on polymérise le monomère ou le mélange de monomères, à l'aide d'initiateurs radicalaires, en présence d'un alkyl(en $C_1$—$C_{18}$)mercaptan ou de mélanges de celui-ci, dans des quantités allant de $(0,503 \cdot X + 1,222)$ pour cent en poids à $(1,728 \cdot X + 4,197)$ pour cent en poids (calculé sur la somme des quantités de monomères et de mercaptan), X représentant le nombre d'atomes de carbone présents dans l'alkylmercaptan.

## Claims

1. Sulfur-containing polymers of styrene, α-methyl styrene, p-methyl styrene, vinyl toluene, acrylonitrile or methyl methacrylate or mixtures thereof having an intrinsic viscosity of 2 to 15 ml/g (as measured in dimethyl formamide at 25°C) and a sulfur content of 1.15 to 3.95% by weight, the sulfur incorporated being present in the form of terminal $C_{1-18}$ thioalkyl groups.

2. A sulfur-containing polymer as claimed in Claim 1, characterized in that it has been produced by radical-initiated emulsion polymerization of a mixture of

a) 50 to 80 parts by weight (α-methyl)styrene and/or p-methyl styrene or other vinyl toluenes,

b) 10 to 30 parts by weight acrylonitrile or methacrylonitrile and

c) a quantity in parts by weight of a $C_{1-18}$ alkyl mercaptan or mixtures thereof which produces a sulfur content of 1.15 to 3.95% by weight in the polymer.

3. A sulfur-containing polymer as claimed in Claim 2, characterized in that it has been produced with 7.5 to 25 parts by weight tert.-dodecyl mercaptan and/or n-dodecyl mercaptan or mixtures thereof.

4. A sulfur-containing polymer as claimed in Claim 1, characterized in that it has been produced by radical-initiated emulsion polymerization of a mixture of

a) 25 to 75 parts by weight (α-methyl) styrene and/or p-methyl styrene or other vinyl toluenes,

b) 25 to 75 parts by weight methyl methacrylate and

c) a quantity in parts by weight of a $C_{1-18}$ alkyl mercaptan or mixtures thereof which produces a sulfur content of 1.15 to 3.95% by weight in the polymer.

5. A sulfur-containing polymer as claimed in Claim 4, characterized in that it has been produced with 7.5 to 25 parts by weight tert.-dodecyl mercaptan and/or n-dodecyl mercaptan or mixtures thereof.

6. A sulfur-containing polymer as claimed in Claim 1, characterized in that it has been produced by radical-initiated emulsion polymerization of a mixture of

a) 10 to 60 parts by weight (α-methyl) styrene and/or p-methyl styrene or other vinyl toluenes,

b) 10 to 60 parts by weight methyl methacrylate,

c) 10 to 30 parts by weight acrylonitrile or methacrylonitrile and

d) a quantity in parts by weight of a $C_{1-18}$ alkyl mercaptan or mixtures thereof which produces a sulfur content of 1.15 to 3.95% by weight in the polymer.

7. A sulfur-containing polymer as claimed in Claim 6, characterized in that it has been produced with 7.5 to 25 parts by weight tert.-dodecyl mercaptan and/or n-dodecyl mercaptan or mixtures thereof.

8. A sulfur-containing polymer as claimed in Claim 1, characterized in that it has been produced by radical-initiated emulsion polymerization of a mixture of

a) 50 to 80 parts by weight and preferably 55 to 75 parts by weight methyl methacrylate,

b) 10 to 30 parts by weight and preferably 15 to 27.5 parts by weight (meth)acrylonitrile and

c) a quantity in parts by weight of a $C_{1-18}$ alkyl mercaptan or mixtures thereof which produces a sulfur content of 1.15 to 3.95% by weight in the polymer.

9. A sulfur-containing polymer as claimed in Claim 8, characterized in that it has been produced with 7.5 to 25 parts by weight tert.-dodecyl mercaptan and/or n-dodecyl mercaptan or mixtures thereof.

10. The use of the sulfur-containing polymers claimed in Claims 1 to 9 as agents for improving the flow of ABS polymers and, at the same time, for protecting them against thermo-oxidative damage.

11. A process for the production of sulfur-containing polymers of styrene, α-methyl styrene, p-methyl styrene, vinyl toluene, acrylonitrile or methyl methacrylate or mixtures thereof having an intrinsic viscosity of 2 to 15 ml/g (as measured in dimethyl formamide at 25°C), characterized in that the monomer or the monomer mixture is polymerized by means of radial initiators in the presence of a $C_{1-18}$ alkyl mercaptan or mixtures thereof in quantities of $(0.503;X+1.222)\%$ by weight to $(1.728;X+4.197)\%$ by weight (based on the total quantity of monomer and mercaptan), X being the number of carbon atoms in alkyl mercaptan.